# EUROPEAN PATENT SPECIFICATION

(11) **EP 1 246 334 B1**
(45) Date of publication and mention of the grant of the patent: **02.11.2005**
(21) Application number: 01302822.0
(22) Date of filing: 27.03.2001
(51) Int. Cl.: H02G 5/04, H02G 5/06

(54) **Power track system**
Leistungsschienensystem
Système de rail de distribution d'énergie

(43) Date of publication of application: 02.10.2002
(73) Proprietor: C & C MARSHALL LIMITED, ST. Leonards-on-Sea, East Sussex TN38 1YJ (GB)
(72) Inventor: Capon, Philip, St Leonards-on-Sea TN38 8EW, East Sussex (GB)
(74) Representative: Lamb, Martin John Carstairs

(56) References cited:
- DE-A- 3 937 371
- DE-U- 29 517 228
- GB-A- 1 304 516

## Description

The present invention relates to a power track system comprising a power track and fixing means for fixing the power track with respect to a structure.

Power tracks are used in a number of environments, for example beneath raised floors of buildings, above false ceilings of buildings or on walls. The power tracks are typically used to provide a protected track for electrical power supplies. The electrical power supply may be a normal power supply obtainable from the mains or a clean power supply which is characterised by a small voltage range or a low number of voltage peaks. Clean power supplies are typically required for sensitive computer equipment. Power tracks can also provide a container for other services such as voice signal transmission and data signal transmission.

Power tracks typically comprise a longitudinally extending channel member and a cover means for closing the open face of the channel member. A plurality of electrically conductive strips are located inside the channel member. In use, the cover prevents users and people maintaining the system from touching conductors which may be electrically live.

In order to fix a power track with respect to a floor, ceiling or wall, it is known to use fixing means such as brackets. A number of different designs of brackets have been used in past.

For example, brackets have been provided which are permanently fixed to a part of the power track, for example by bolts or welding. The bracket comprises a projection beside the power track allowing the track to be fixed in place, for example by screws.

Other brackets have been provided comprising a pair of upstanding flanges for engaging between the walls of the power track and a pair of outwardly extending strips for engaging the surface. This kind of bracket can be moved longitudinally along the power track giving some flexibility in positioning. It can be fixed in place for example by screws.

A third known type of bracket comprises a bar pivotally fixed to the bottom of a power track. In an outwardly swivelled position the further ends of the bar extend beyond the power track so that a screw can be passed through respective holes to fix the bar and the power track to a surface.

In practice, power track systems with such types of bracket are relatively inflexible. Fixing the brackets in the correct position for the power tracks typically involves very careful laying out or a process of trial and error.
None of the prior art can be used with the power track adjacent to a wall, as the bracket must project beyond the power track. The swivel type in particular, cannot be a swivelled to a fixing position unless there is sufficient space between the power track and the wall. The fixed bracket and the bracket which is slid up and down the power track are relatively bulky in storage.
DE29517228U discloses a power track system in which a fixing means is provided which comprises attachment means for attaching to a surface and a retainer part for engaging the power track, the attachment means and retainer part being movable with respect of two one another to accommodate variations in the wall surface.

The present inventors have set out to provide a power track system including a fixing means which is flexible and easy to use. The present inventors have realised that a very flexible fixing means for power track systems can be provided if the fixing means comprises two parts which are movable with respect to one another. For example, there may be means for engaging the power track movably mounted with respect to means for engaging a structure.

The present invention provides a power track system, comprising a longitudinally extending channel member comprising a base part and two upstanding wall parts extending from the base member, and a plurality of electrically conductive strips mounted in the channel member, and fixing means for fixing the channel member to a surface, the fixing means comprising attachment means for attaching to a surface, a retainer part for releasably engaging the power track wherein the retainer part is movably mounted with respect to the attachment means, characterised in that the attachment means is configured so that it is movable between a first position in which it projects from the retainer part and is configured to attach to a surface and at least a second position in which it does not extend beyond the retainer part.

The fixing means may be made of any suitable material for example metal or thermoplastic material. Preferably, it is made of metal, for example stainless steel. Preferably, the parts of the fixing means are made by stamping blanks from a sheet of metal and folding the blanks into the desired shape.
The attachment means suitably comprises a laminar portion for resting against the surface, the laminar portion being attachable to the surface. The laminar portion may be attachable by any suitable means, for example by adhesive or, by mechanical connection to formations existing on the surface. However, the laminar portion preferably comprises a hole and a screw extending through the hole for engaging the surface.

Preferably, there are a plurality of attachment means. Preferably, each attachment means is movably mounted with respect to the retainer part. Preferably, each attachment means is movably mounted with respect to the other attachment means. This allows maximum flexibility in the design.

It is preferred that the fixing means comprises a retainer part for releasably engaging the power track, an attachment means for projecting from one side of the power track and at least one further attachment means for projecting from the other side of the power track. Preferably, there are a plurality of attachment means, each attachment means projecting from the opposite side of the track to the succeeding attachment means.

Preferably, the fixing means is rotationally symmetrical about an axis of symmetry which extends normal to the base part of the channel member, in use.

The retainer part for releasably engaging the power track may engage with the base or at least one wall portion of the channel member. It may engage a cover means provided to close the open face of the channel member. Preferably, the retainer part is for engaging a wall of the channel member. Preferably, there is a first retainer part for engaging one of the upstanding wall parts of the channel member and a second retainer part for engaging the other upstanding wall part.

The or each retainer part may engage the channel member simply by abutting it. For example, the retainer parts may each a butt a wall part of the channel member so that the channel member is held therebetween. Preferably, however, the retainer part comprises means for releasably engaging the channel member, for example fixing such as screws or bolts or resiliently deformable parts for forming a snap fit with a formation on the channel member. For example, the channel member may be formed with a longitudinally extending shoulder formation on at least one side, at least one retainer part being engagable with the shoulder formation. The retainer part may be engaged with the channel before installation of the power track, for example in the factory or by the user.

Where there are at least two retainer parts, one of them must be movably mounted with respect to the attachment means. However, the second retainer part may be movably mounted with respect to the attachment means or it may be fixed with respect to the attachment means. Preferably, it is movably mounted with respect to the attachment means.

Locking means may be provided for releasably fixing the retainer part or parts with respect to the attachment means in one of a plurality of different positions. The locking means may comprise any suitable means. For example, frictional means may be provided such as a clamp or screw mounted on one of the retainer part and the attachment means, frictionally contacting the other of the retainer part or attachment means.

In particularly preferred embodiment, the attachment means is configured so that, when it is attached to a surface, a part of the retainer part is held between the attachment means and the surface. In this way, the retainer part can be frictionally held in position by the action of attaching the fixing means to the surface. This is typically simple arrangement.

The retainer part or parts may be movably mounted with respect to the attachment means by any suitable arrangement. Preferably, the retainer part and the attachment means comprise co-operating sliding parts for sliding with respect to one another. The retainer part may be movable between discrete positions or it may be continuously movable over a plurality of positions. A projection may be formed of one of the retainer part or the attachment means for engaging at least one recess in the other of the retainer part or attachment means to allow the retainer part to be movably mounted between discrete positions. The retainer part may be continuously variable over a first range of movement and discretely variable over a second range of movement.

The retainer part may move linearly with respect to the attachments means. Alternatively, it may be pivoted with respect to it.

The hole in the attachment means may be a linearly extending hole of width less than the width of the head of predetermined type of screw. In this way, the exact position of the screw with respect to the attachment means is variable, giving additional flexibility in positioning.

Preferably, the retainer part or parts is configured so that it may engage the power track at any of a plurality of positions along the length of the power track.

The present invention offers a number of advantages.

During the storage and transport, the retainer part and the attachment means can be collapsed to their smallest size, to reduce bulk.

The power track system of the present invention preferably further comprises coupler units for joining together power track sections placed end to end. The coupler means comprises a first set of electrically conductive connectors projecting therefrom for engaging with the electrically conductive strips of a first power track and a second set of electrically conductive connectors projecting from the coupler means for engaging the electrically conductive strips of a second power track, each connector of the first set being electrically connected to a corresponding connector of the second set. Preferably, as set out in our co-pending application, the connectors of the first and second set each comprise a first connector portion and a second connector portion resiliently mounted with respect to the first connector portion and facing the first connector portion, for gripping an electrically conductive strip of a power track therebetween. This provides good electrical contact between two sections of power track.

The power track system preferably further comprises power supply means, the power supply means comprising a power track section comprising a channel member and a plurality of electrically conductive strips located in the channel member, the electrically conductive strips comprising at one end connectors for connection to wires of a power supply cable, the power track section being placeable with its other end adjacent to a second power track section and couplable thereto by coupler means as described above.

The power track system of the present invention preferably further comprises an interlink unit. Interlink units provide flexible conductive means for putting together different sections of power track, for example when turning corners or negotiating obstacles. The interlink unit preferably comprises a first power track section comprising a channel member having a plurality of electrically conductive strips located therein, the electrically conductive strips being connected at one to the wires of an electrically conductive cable, the first power track portion being couplable at the other end to a second power track section by coupler means as described above, a third power track section comprising a channel member having a plurality of electrically conductive strips located therein, the electrically conductive strips being connected at one to the electric wires of the electrically conductive cable, the third power track section being couplerable at the other end to a fourth power track section using coupler means as described above.

When assembling a power track system according to the invention, one normally starts by placing power supply means in position, placing the first power track section so that it can be engaged with the power supply unit by a coupler means and adding successive power section end to end. The interlink units may be used to bridge obstacle or turn corners or start a new run of power track sections.

When assembling a power track system the power track with the fixing means engaged can be placed in an approximate position. The attachment means is then fixed to the surface. The power track may then be placed into its final position, for example after other manipulations, whereupon the attachment means is fixed with respect to the retainer part. This may be by tightening the retainer part onto the surface.

Where screw fixing is used, the attachment means may be placed in its selected fixing position, the position of the screw hole marked on the surface, the attachment means moved out of the way so that the hole can be drilled in the surface without contacting the attachment means. Thereafter, the attachment means is moved into is final position, and screwed into position. If, however, the hole is incorrectly drilled, the attachment means can be re-positioned to adapt to the new position.

In some cases, some parts of the surface are more suitable for attachment than others. The present invention allows the installer to fix the attachment means to the best type of surface for fixing while still positioning the power track in the desired position.

The fixing means of the invention allows the power track to be mounted against walls or other obstacles. This is particularly the case where there are a plurality of attachment means which are movable between a first position in which they are contained within the retainer part and a second position in which they can be used for attachment to a surface, at least one attachment means being retained in its position contained within with the retainer part and at least one attachment means being in its position for attachment to a surface.

The channel may be formed of any suitable material, but is preferably made of metal such as steel or aluminium, particularly preferably stainless steel or galvanised steel.

The power track may be provided in any suitable length. Preferably, it is provided in the form of power track portions which can be placed end to end. The power track portions may be of any suitable length, for example in the range of 1.2 metres to up to 3.6 metres.

The channel member is formed in a suitable way, for example by extrusion or by forming of sheet material into appropriate shapes.

The cover means may be formed of any suitable material, for example thermoplastic or metal. Preferably, there are co-operating formations on the walls of the channel member and on the edges of the cover means to allow the cover means to be snap fitted into place on the channel member.

The cover means may be interrupted at places to allow access means such as power tap off, sockets, voice or data communications sockets, interlinks, or feed units to be engaged with the channel member to allow access to the electrically conductive strips or other services contained in the channel member.

Suitably, the ends of the power tracks are normal to their length. This allows great flexibility in placing respective power track portions end to end. Mechanical coupling formations may be formed on the ends of the power track portions to allow them to be firmly located with respect to one another and fixed together mechanically.

Preferably, where the power track is provided in the form of power track portions, coupler means are provided for joining power track portions placed end to end.

Preferably, the coupler means has a first set of electrically conductive connectors projecting therefrom for engaging with the electrically conductive strips of a first power track and a second set of electrically conductive connectors projecting from the coupler means for engaging the electrically conductive strips of the second power track, each connector of first set being electrically connected to a corresponding connector in the second set, the connectors of the first and second set each comprising a first connector portion and a second connector portion resiliently mounted with respect to the first connector portion and facing the first connector portion for gripping an electrically conductive strip of a power track therebetween. The coupler means preferably comprises a body part in which the connectors are mounted.

Preferably, the coupler means comprises gripping parts for releasably engaging the channel members or cover means so that the coupler means can be fixed in position securely and removed when required.

The electrically conductive connectors are formed of any suitable material, particularly a metal, for example copper or brass which has good electrical conductivity and strength.

Preferably, the end part of each power track portion comprises an access part, closing the open face of the channel, the access part having a hole above each conductive strip.

The access part serves to prevent a user accidentally touching the electrically conductive strips but allows access to the electrically conductive strips by the electrically conductive connectors. Accordingly, a particularly safe but simple structure is provided which is easy to use.

In a preferred embodiment, the channel member is formed of metal and acts a conductor for a power supply. Preferably, the power track comprises an electrically conductive strip connected to the live terminal of a power supply and, an electrically conductive strip connected to the neutral terminal of a power supply, the metal channel member being connected to the earth terminal of the power supply. Preferably, the power track comprises live, neutral and earth conductors as described above for a normal power supply and, separately, live, neutral and earth conductors for a clean power supply.

The present invention will be further described by way of example only with reference to the accompanying drawings, in which;

### BRIEF DESCRIPTION OF DRAWINGS

Figure 1 is a schematic cross sectional view of a power track used in the present invention.
Figure 2 is a schematic cross section view of the power track with a fixing means according to a first embodiment in position.
Figure 3 is an isometric drawing of the fixing means of the first embodiment.
Figure 4 is an isometric drawing of the fixing means of the first embodiment in a position on a power track.
Figure 5 is an isometric drawing of the fixing means of the first embodiment with the brackets in a different position.
Figure 6 shows the fixing means with the brackets fully retracted.
Figure 7 is an isometric drawing of the second embodiment of fixing means.

### DETAILED DESCRIPTION OF THE DRAWINGS

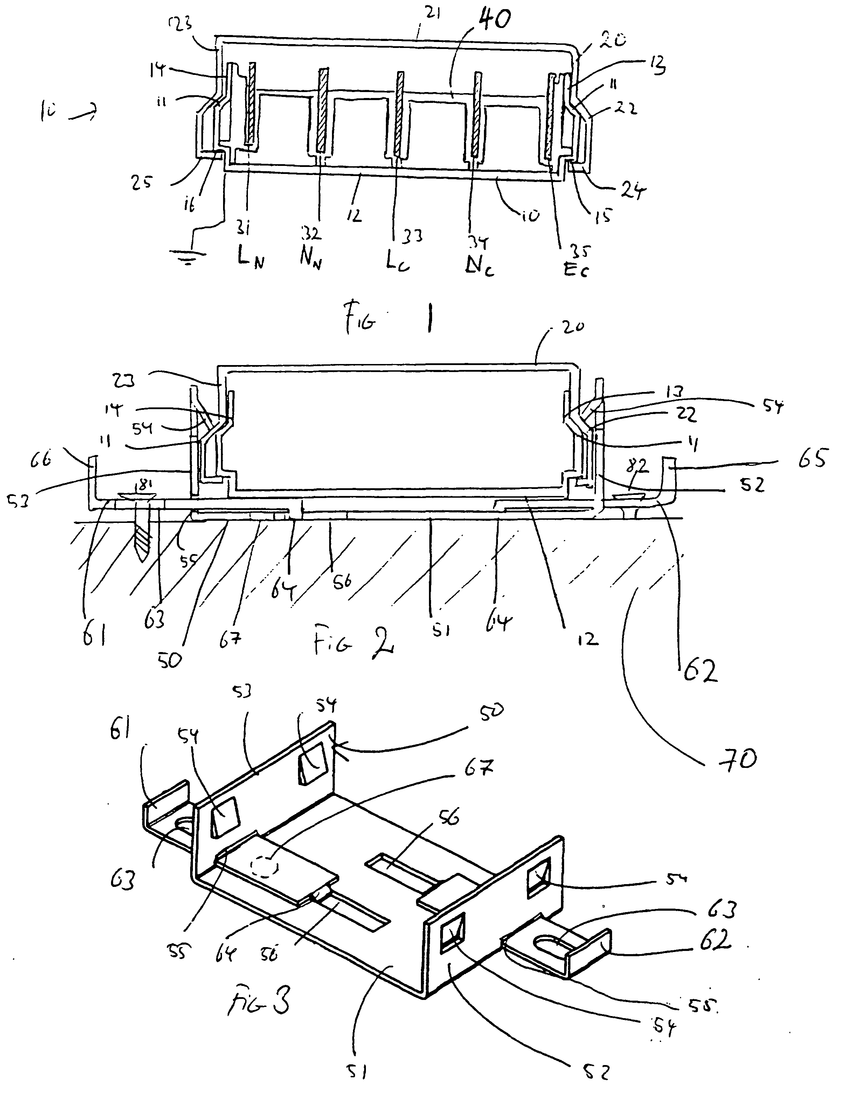

Figure 1 shows a schematic cross section through a power track used in the present invention. The power track extends indefinitely in the direction normal to the page.

The power track comprises a channel member 10 formed of rolled and formed steel. It is formed with a shoulder 11 at its lower edge.

The channel member 10 comprises a continuous open channel having a base 12, two side walls, 13 and 14, each side wall comprising a shoulder portion 11 and a rebate 15,16. Cover means 20 is shown covering the channel member 10.

The cover means comprises a top 21, two sides 22 and 23, each side having a shoulder portion for resting against the shoulder portion 11 and gripping means 24 and 25. In use, the cover means has sufficient resilient deformability that the gripping means 24 and 25 can be pushed over the shoulders 11 and pushed down until they snap into place beneath the rebates 15 and 16 respectively. The shoulder parts 11 are formed slightly inclined to make assembly easier.

The channel member further comprises five electrically conductive strips or busbars 31,32,33,34 and 35. These are arranged to provide a normal live conductor (L_{N}) a normal neutral (N_{N}) a clean live conductor (L_{C}), a clean neutral conductor (N_{C}) and a clean earth conductor (E_{C}) respectively. The steel channel member 10 provides the normal earth conductor and is shown schematically connected to electrical earth.

The electrically conductive strips are held in place by a busbar clip 40 which is formed of insulating material such as plastic. A plurality of busbar clips are provided at intervals along the channel member 10.

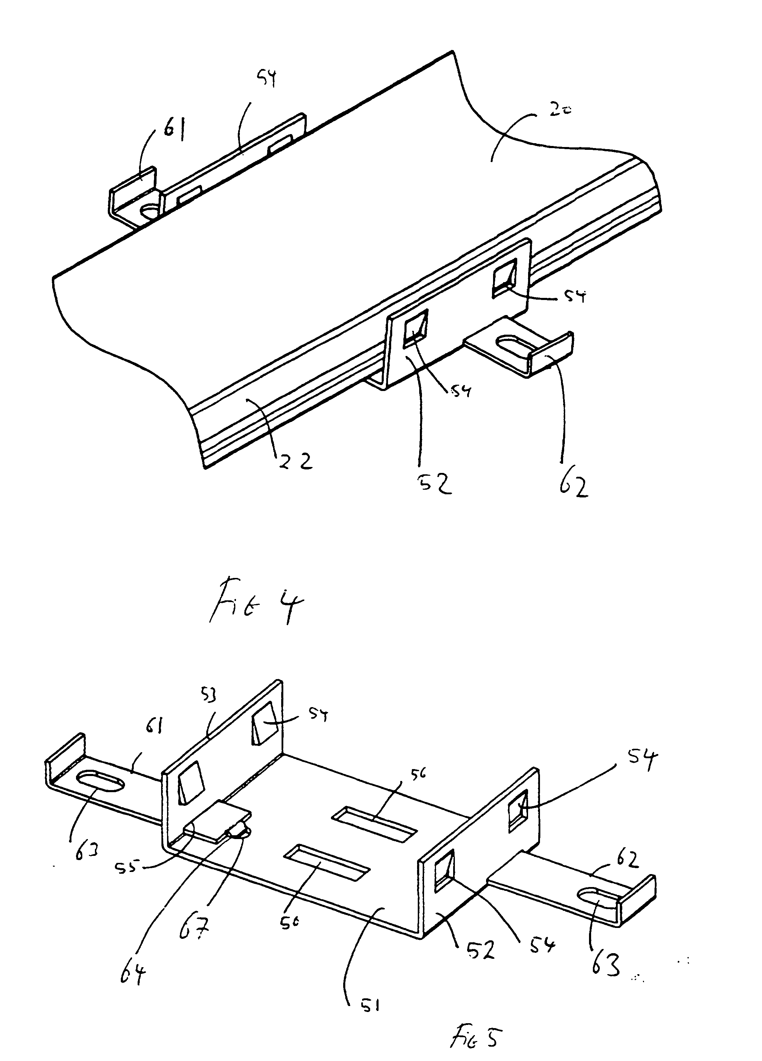

Figure 2 shows a schematic cross section through a power track according to the invention. The busbars and busbar clip 40 are omitted for clarity.

The fixing means is shown in position. The fixing means comprises a retainer part 50 in the form of a short channel section. It comprises a base part 51 and two wall parts 52 and 53. Wall part 52 engages the side 22 of the cover 20 and wall part 53 engages the side 23 of the cover. The power track is resiliently held in position by resiliently deformable tongues of 54, prepared by slotting and bending, which project inwardly from the walls 52 and 53 so that they engage shoulder portions of the sides 22 and 23. As a result, the power track is held securely in position or adjusted as required. The power track 50 can be removed from the retainer part 50 if necessary.

Attachment means comprising a pair of brackets 61 and 62 is provided. The attachment means is for fixing the power track to a surface 70. Each bracket 61,62 comprises a hole 63 for engagement by a screw 81,82 which is screwed into surface 70. Each bracket 61, 62, extends through a hole 55 in the retainer part. A tab 64 on the bracket 61,62 slides in a slot 56 to guide motion of the bracket 61,62 with respect to retainer part 50. Each bracket(61,62) is provided with an upturned end, providing a ready grip or the user and protection for the head of fixing screw 81.

The base part 51 is further provided with a screw hole 67 beneath each bracket 61,62. The hole 67 is positioned so that, when the bracket 61,62 is fully retracted into the base part 51, it will align with the hole 63 so that a screw may be passed through both holes to fix the base part 51 to a surface.

Power track 10 is pushed into the channel of the retainer part 50 so that the resilient tongues 54 engage over the shoulder parts in the sides 22,23.

Then, the power track is placed on the surface 70. The brackets 61, 62 are extended and the positions are selected for screws 81 and 82 on the surface 70. Optionally, the brackets 61 and 62 are withdrawn to allow holes to be drilled for the screws, after which the brackets 61 and 62 are extended again. When screws 82 and 82 are screwed tightly into engagement with surface 70 and the brackets 61 and 62, respectively, the brackets 61 and 62 are fixed with respect to the surface 70. They also trap the base part 51 of the retainer part 50 tightly on the surface 70 so that it is fixed in position.

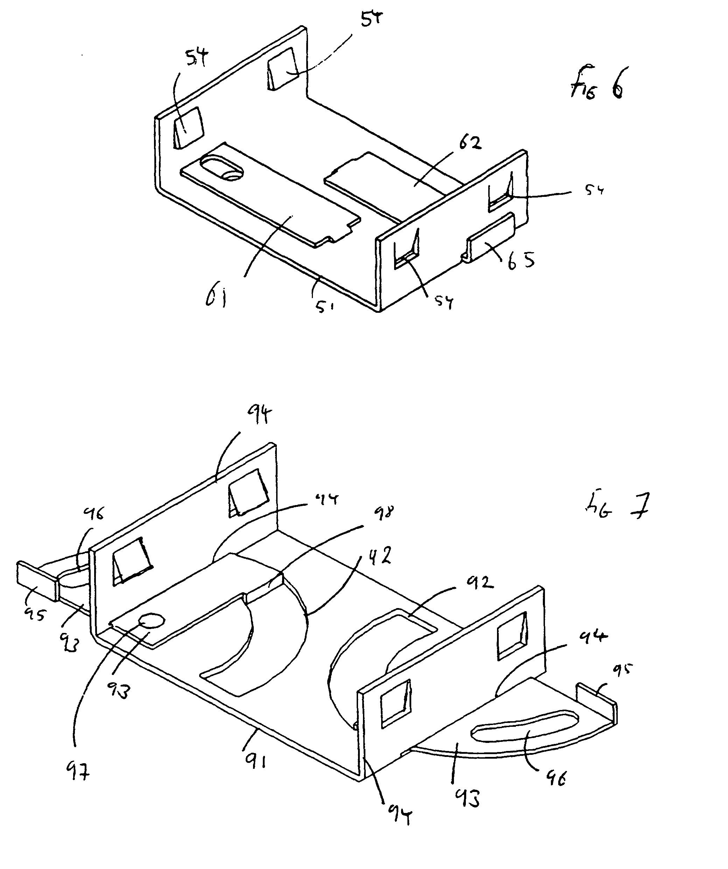

The fixing member shown in figures 2 and 3 is clearly very flexible in use, allowing the user to select the optimum position for the screws 81 and 82. Further, the fixing means can be used to mount a power track adjacent a wall. For example, if the wall is located on the right hand side of figure 2, bracket 62 can be withdrawn fully into the base part 51 and the wall 52 placed abutting the wall surface.

Bracket 61 and 62 can be mounted at different positions or extensions from the base member. If the hole is drilled in the wrong position, the bracket 61 or 62 can be adjusted accordingly. If it is attempted to drill a hole in the part of the surface which turns out to be unsuitable, due to its contour or an obstruction, the position of bracket 61 or 62 can be adjusted to avoid or compensate without needing to move any part of the power track.

The hole 67 can also be used if is desired to extend the brackets 62 or 63 further beyond the base part 51. The tab 64 can be disconnected from the slot 56 and located instead in the hole 67, as shown in figure 5. This adjustment requires that the base part 51 be disengaged from the power track before the tab 46 is connected to the hole 67.

This extended arrangement has another advantage in that it provides a fixed bracket since the base 51 cannot slide with respect to the brackets once tab 64 is located in hole 67. When base 51 is connected to a wall or other vertical structure, the mounting force of the bracket 62 and 63 with respect to base 51 is dependent on the degree of extension of the brackets 62 and 63 with respect to base 51. This is fixed when hole 67 is used and thus the manufacturer or seller of the bracket can specify an accurate optimum load limit or the like for the bracket when it is used in this fixed configuration.

Alternatively, a screw may passed through the hole 67 to engage the surface directly, if particularly strong fixing is required, for example if the power track is mounted on a vertically orientated wall.

Figure 6 shows the fixing means with the brackets fully retracted, for example for storage or transport.

Figure 7 is an isometric drawing of the second embodiment of fixing means. This comprises a base part 91 with two wall parts 94 which are the same in construction as the wall parts 52 and 53 as shown in figure 2 and will not be described further. The base part 91 comprises a pair of arcuate slots 92. A pair of sector plates 93 are provided, pivotably mounted about pivots 97, on the base part 51. The sector plates extend through longitudinally extending slots 94 from the inside of the base part to the outside. The sector plates further include an outside flange or stop member 95 to allow the user to manipulate the sector plate and to limit the inward movement of the sector plate. There is a further internal tab 98 engaging in the arcuate slot 92 so limiting rotational movement of the sector plate to the angular range covered by the slot 92. In use, the embodiment shown in figure 7 can be used in similar manner to that shown in figures 2-6. A screw (not shown) can be engaged with a surface through the slot 96 in sector plate 93 at a wide variety of selected positions.

The present invention has been described above by way of example only and modification can be made within the spirit of the invention, which extends to equivalents of the features described. The invention also consist in any individual features described or implicit herein or shown or implicit in the drawings or any combination of any such features or any generalisation of any such features or combination.

## Claims

1. A power track system, comprising:
a longitudinally extending channel member (10) comprising a base part (12) and two upstanding wall parts (13,14) extending from the base part, and
a plurality of electrically conductive strips (31,32,33,34,35) mounted in the channel member (10),
fixing means for fixing the channel member (10) to a surface, the fixing means comprising:
attachment means (61,62,93) for attaching to the surface, and
a retainer part (50,91) for releasably engaging the power track,
wherein the retainer part is movably mounted with respect to the attachment means (61,62,93), **characterised in that** the attachment means (61,62,93) is configured so that it is movable between a first position in which it projects from the retainer part (50,91) and is configured to attach to a surface and at least a second position in which it does not extend beyond the retainer part (50,91).

2. A power track system according to claim 1, wherein the fixing means comprises a first retainer part for engaging one of the upstanding wall parts (13) of the channel member (53,94) and a second retainer part (53,94) for engaging the other upstanding wall part (14).

3. A power track system according to claim 2, wherein the second retainer part and the first retainer (52, 94) part are both movably mounted with respect to the attachment means (61,62,94).

4. A power track system according to any preceding claim wherein the attachment means (62,62,94) is configured so that, when it is attached to a surface, a part (50,91) of the retainer part or parts is held between the attachment means (61,62,94) and the surface.

5. A power track system according to any preceding claim, wherein there is a plurality of attachment means (61,62,94).

6. The power track system according to any preceding claim, wherein the attachment means (61,62) is slidably mounted with respect to the retainer part (50).

7. The power track system according to claim 6, wherein the attachment means (61,62) is linearly slidable with respect to the retainer part (50).

8. The power track system according to claim 6, wherein the attachment means (94) is rotatably mounted with respect to the retainer part (91).

## Patentansprüche

1. Stromschienensystem, das folgendes umfaßt:
ein in Längsrichtung verlaufendes Kanalelement (10), das einen Basisteil (12) und zwei hochstehende Wandteile (13, 14), die sich vom Basisteil erstrecken, umfaßt, und
mehrere, im Kanalelement (10) angebrachte elektrisch leitfähige Streifen (31, 32, 33, 34, 35),
Anbringungsmittel zum Anbringen des Kanalelements (10) an einer Fläche, wobei die Anbringungsmittel folgendes umfassen:
Befestigungsmittel (61, 62, 93) zum Befestigen an der Fläche und
einen Halterteil (50, 91), um die Stromschiene lösbar in Eingriff zu bringen,
wobei der Halterteil beweglich im Verhältnis zu den Befestigungsmitteln (61, 62, 93) angebracht wird, **dadurch gekennzeichnet, daß** das Befestigungsmittel (61, 62, 93) so konfiguriert wird, daß es bewegt werden kann zwischen einer ersten Position, in der es vom Halterteil (50, 91) vorsteht und zum Befestigen an einer Fläche konfiguriert ist, und wenigstens einer zweiten Position, in der es sich nicht über den Halterteil (50, 91) hinaus erstreckt.

2. Stromschienensystem nach Anspruch 1, wobei das Anbringungsmittel einen ersten Halterteil, um einen der hochstehenden Wandteile (13) des Kanalelements (53, 54) in Eingriff zu nehmen, und einen zweiten Halterteil (53, 94), um den anderen hochstehenden Wandteil (14) in Eingriff zu nehmen, umfaßt.

3. Stromschienensystem nach Anspruch 2, wobei der zweite Halterteil und der erste Halterteil (52, 94) beide beweglich im Verhältnis zu den Befestigungsmitteln (61, 62, 94) angebracht werden.

4. Stromschienensystem nach einem der vorhergehenden Ansprüche, wobei das Befestigungsmittel (61, 62, 94) so konfiguriert wird, daß ein Teil (50, 91) des oder der Halterteils oder -teile zwischen dem Befestigungsmittel (61, 62, 94) und der Fläche gehalten wird, wenn es an einer Fläche befestigt wird.

5. Stromschienensystem nach einem der vorhergehenden Ansprüche, wobei es mehrere Befestigungsmittel (61, 62, 94) gibt.

6. Stromschienensystem nach einem der vorhergehenden Ansprüche, wobei das Befestigungsmittel (61, 62) verschiebbar im Verhältnis zum Halterteil (50) angebracht wird.

7. Stromschienensystem nach Anspruch 6, wobei das Befestigungsmittel (61, 62) im Verhältnis zum Halterteil (50) linear verschoben werden kann.

8. Stromschienensystem nach Anspruch 6, wobei das Befestigungsmittel (94) drehbar im Verhältnis zum Halterteil (91) angebracht wird.

## Revendications

1. Système de rail de distribution d'énergie, comprenant:
un élément de canal à extension longitudinale (10) comprenant une partie de base (12) et deux parties de paroi verticales (13, 14) s'étendant à partir de la partie de base, et
plusieurs bandes conductrices d'électricité (31, 32, 33, 34, 35) montées dans l'élément de canal (10),
un moyen de fixation pour fixer l'élément de canal (10) sur une surface, le moyen de fixation comprenant:
un moyen d'attache (61, 62, 93) pour attacher sur la surface, et
une partie de retenue (50, 91) pour engager de manière amovible le rail de distribution d'énergie,
la partie de retenue étant montée de manière mobile par rapport au moyen d'attache (61, 62, 93), **caractérisé en ce que** le moyen d'attache (61, 62, 93) est configuré de sorte à pouvoir être déplacé entre une première position dans laquelle il déborde de la partie de retenue (50, 91) et est configuré pour attacher sur une surface, et au moins une deuxième position, dans laquelle il ne s'étend pas au-delà de la partie de retenue (50, 91) .

2. Système de rail de distribution d'énergie selon la revendication 1, dans lequel le moyen de fixation comprend une première partie de retenue pour engager une des parties de paroi verticales (13) de l'élément de canal (53, 94) et une deuxième partie de retenue (53, 94) pour engager l'autre partie de paroi verticale (14).

3. Système de rail de distribution d'énergie selon la revendication 2, dans lequel la deuxième partie de retenue et la première partie de retenue (52, 94) sont montées de manière mobile par rapport au moyen d'attache (61, 62, 94).

4. Système de rail de distribution d'énergie selon l'une quelconque des revendications précédentes, dans lequel le moyen d'attache (62, 62, 94) est configuré de sorte que lorsqu'il est attaché à une surface, une partie (50, 91) de la partie ou des parties de retenue est retenue entre le moyen d'attache (61, 62, 94) et la surface.

5. Système de rail de distribution d'énergie selon l'une quelconque des revendications précédentes, comprenant plusieurs moyens d'attache (61, 62, 94).

6. Système de rail de distribution d'énergie selon l'une quelconque des revendications précédentes, dans lequel le moyen d'attache (61, 62) est monté pour un glissement sur la partie de retenue (50).

7. Système de rail de distribution d'énergie selon la revendication 6, dans lequel le moyen d'attache (61, 62) peut effectuer un glissement linéaire par rapport à la partie de retenue (50).

8. Système de rail de distribution d'énergie selon la revendication 6, dans lequel le moyen d'attache (94) est monté par rotation sur la partie de retenue (91).
